Europäisches Patentamt

European Patent Office

Office européen des brevets

(11) Numéro de publication: **0 109 904**
**B1**

(12) **FASCICULE DE BREVET EUROPEEN**

(45) Date de publication du fascicule du brevet: **02.09.87**

(51) Int. Cl.⁴: **G 02 B 6/26,** G 02 B 6/28

(21) Numéro de dépôt: **83402216.2**

(22) Date de dépôt: **17.11.83**

(54) **Coupleur extracteur de signal optique.**

(30) Priorité: **18.11.82 FR 8219284**

(43) Date de publication de la demande:
**30.05.84 Bulletin 84/22**

(45) Mention de la délivrance du brevet:
**02.09.87 Bulletin 87/36**

(84) Etats contractants désignés:
**AT BE CH DE FR GB IT LI LU NL SE**

(56) Documents cités:
**EP-A-0 064 919**
**EP-A-0 080 887**
**EP-A-0 099 823**

**PATENTS ABSTRACTS OF JAPAN, vol. 4, no.
58 (P-9) 540r, 30 avril 1980, page 147 P 9**

(73) Titulaire: **INSTRUMENTS S.A.**
**25, avenue de l'Opéra**
**F-75001 Paris (FR)**

(72) Inventeur: **Laude, Jean-Pierre**
**3 rue des Graveriots**
**F-91690 St Cyr la Rivière (FR)**

(74) Mandataire: **Phélip, Bruno et al**
**c/o Cabinet Harlé & Phélip 21, rue de la
Rochefoucauld**
**F-75009 Paris (FR)**

Courier Press, Leamington Spa, England.

## Description

La présente invention concerne un dispositif de couplage d'un signal transmis par fibres optiques. Il est plus particulièrement destiné à être intercalé sur une fibre optique de transmission de façon à permettre, tout en maintenant la continuité de transmission du signal initial à travers le dispositif de l'amont vers l'aval, d'extraire une partie du signal vers un détecteur, et en même temps de réintroduire un nouveau signal vers l'aval; ce nouveau signal pourra d'ailleurs aussi bien être le même signal extrait après régénération, ou un autre signal porteur de nouvelles informations à superposer aux informations initiales.

Les dispositifs connus utilisés actuellement dans ce but comportant généralement, entre la fibre de transmission amont et la fibre de transmission aval, un système optique destiné à rendre parallèles les rayons lumineux issus de la fibre amont, et un système optique focalisant à nouveau le faisceau parallèle sur l'entrée de la fibre aval. Dans la partie où les rayons sont parallèles, le dispositif comporte un système semi-réfléchissant qui dérive une fraction contrôlée de la lumière vers un détecteur ou tout autre système récepteur.

Un tel dispositif présente l'inconvénient, lorsqu'il est prévu de réintroduire un noveau signal, que la surface semi-réfléchissante laisse passer une partie de la lumière réintroduite, qui passe alors directement vers le détecteur et vient fausser l'information qui y est recueillie.

La demande de brevent european EP—A— 0 064 919 du même déposant apporte une première solution à ce problème par un dispositif comportant un miroir sphérique concave principal dont la partie centrale forme un autre petit miroir sphérique concave de déviation, de même sommet et de même rayon que le miroir principal, mais dont le centre $C_2$ est légèrement décalé par rapport au centre $C_1$ du miroir principal. Le miroir principal assure alors la continuité de transmission de la plus grande partie du signal optique entre une fibre amont et une fibre aval disposées symétriquement par rapport à $C_1$, tandis que le petit miroir central de déviation permet de prélever une partie du signal vers une fibre d'extraction disposées symétriquement à la fibre amont par rapport à $C_2$, et d'introduire un nouveau signal par une fibre de réinjection disposée symétriquement à la fibre aval par rapport à $C_2$.

Maïs la réalisation d'un -tel miroir complexe, avec une petite partie centrale dont l'axe est dévié par rapport à l'axe principal, pose des problèmes techniques et économiques et se prête mal à une fabrication industrielle en grandes quantités.

L'invention apporte une nouvelle solution et propose un dispositif decouplage de signal optique tel que défini à la revendication 1.

Selon une forme de réalisation préférentielle de l'invention l'ensemble est monobloc et les centres $C_1$ et $C_2$ sont décalés d'une distance égale au diamètre des fibres tandis que les extrémités des fibres dont jointives et alignées dans la direction $C_1$—$C_2$.

L'invention sera mieux comprise en se référant à un mode de réalisation particulier donné à titre d'exemple et illustré par les dessins annexés.

Les figures 1 et 2 sont des schémas fonctionnels représentant les capacités du dispositif. La figure 1 concerne le cas d'une extraction partielle du signal et d'une injection d'un autre signal indépendant. La figure 2 concerne le cas où la portion de signal extrait est réinjectée après régénération, tandis que la partie principale du signal est transmise en lui donnant un léger retard.

La figure 3 est une représentation simplifiée d'un coupleur-extracteur monobloc réalisé selon l'invention.

La figure 4 est une coupe selon IV—IV de la figure 3.

Les figures 5 et 6 montrent les positions relatives des fibres aboutissant au coupleur-extracteur, respectivement dans les cas des schémas fonctionnels des figures 1 et 2.

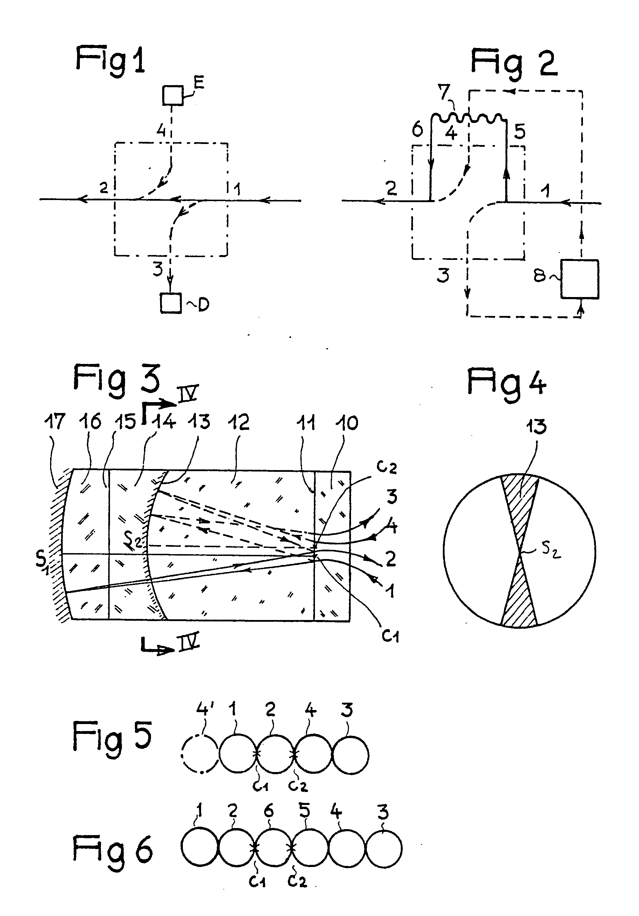

En se référant tout d'abord à la figure 1 on verra que le coupleur-extracteur représenté ici en traits mixtes reçoit en amont la fibre optique 1 porteuse d'un signal dont une partie doit être transmise à la fibre aval 2 selon le trajet direct représenté symboliquement par un trait plein. Le dispositif a auissi pour rôle d'extraire une partie du signal pour la dériver vers la fibre 3 reliée à un détecteur D; il doit aussi assurer l'injection dans la fibre aval 2 du signal supplémentaire issu de l'émetteur E et transmis par la fibre 4. Les trajets de dérivation et d'injection sont représentés symboliquement en traits interrompus.

Selon le schéma de la figure 2 le signal extrait et dérivé vers la fibre 3 est régénéré en 8 pour être ensuite réinjecté par la fibre 4 vers la fibre aval 2. Les circuits de régénération 8 pouvant entrainer un retard du signal réinjecté en 4 par rapport au signal initial transmis directement, on réalise ici une remise en phase des deux signaux en obligeant la lumière transmise de 1 à 2 à parcourir un trajet supplémentaire dans une fibre intermédiaire retardatrice 7. Cette fibre retardatrice est raccordée à l'appareil par ses extrémités 5 et 6.

En se référant maintenant aux figures 3 et 4 qui correspondent au schéma de la figure 1 on verra que les quatre fibres 1, 2, 3 et 4 sont noyées dans un bloc 10 de telle sorte que leurs extrémités affleurent sur la face plane 11 du bloc. Les quatre fibres sont alignées en positions relatives qui seront précisées plus loin. La surface 11 forme l'interface de contact avec un autre bloc transparent 12 dont l'autre extrémité forme une surface sphérique 13 dont le centre $C_2$ est dans le plan 11. La surface 13 est traitée pour être partiellement réfléchissante, les zones réfléchissantes étant disposées de façon symétrique par rapport au sommet $S_2$ défini par le diamètre principal perpendiculaire au plan 11. La figure 4 montre un exemple de répartition des zones réfléchissantes, ici en deux secteurs opposés. Le bloc 12 est prolongé par un troisième bloc transparent 14, de même indice que le bloc 12, et comportant une surface sphérique conjuguée à la surface 13 et une surface plane 15 parallèle au plan 11. Le dernier bloc 16, toujours de même indice, est en contact plan sur la face 15, et son autre face 17 forme un miroir sphérique de sommet $S_1$ dont le centre $C_1$ est également situé sur le plan 11.

Par glissement sur la surface 15 la position du bloc 16 est règlée par rapport au bloc 12 de telle sorte que les deux centres $C_1$ et $C_2$ soient légèrement décalés dans le plan 11. L'ensemble est également règlé de telle sorte que, comme on le voit mieux sur la figure 5 les fibres 1 et 2 sont disposées symétriquement par rapport à $C_1$ tandis que, dans le même alignement, les fibres 3 et 4 sont respectivement en position symétrique des fibres 1 et 2 par rapport à $C_2$. Après réglage des blocs sont collés les uns aux autres pour former un ensemble monobloc.

La lumière issue de la fibre 1 rencontre tout d'abord la surface 13 qui, par ses zones réfléchissantes, en renvoie une petite partie vers le point symétrique de la fibre 1 par rapport à $C_2$, c'est à dire vers la fibre 3, et cette partie est ainsi dérivée vers le détecteur D.

La plus grande partie de la lumière traverse la partie transparente de la surface 13 et est réfléchie par la miroir 17 vers le point symétrique de la fibre 1 par rapport à $C_1$, c'est à dire vers la fibre 2.

De même la lumière issue de la fibre 4 se réfléchit partiellement sur les zones réfléchissantes 13 vers le point symétrique de la fibre 4 par rapport à $C_2$, c'est à dire la fibre 2 qui reçoit donc ainsi à la fois de la lumière issue de 1 et de 4.

L'autre partie de la lumière issue de la fibre 4 et qui a traversé les zones transparentes de la surface 13 es réfléchie par le miroir 17 vers un point 4' symétrique de la fibre 4 par rapport à $C_1$ (figure 5); cette lumière sort du dispositif.

On notera que si une partie de la lumière réfléchie vers la fibre 2, et en particulier celle de forte intensité en provenance de l'émetteur par le fibre 4, au lieu de pénétrer totalement dans la fibre 2 est partiellement réfléchié par l'extrémité de la fibre pour constituer une lumière parasite, celle-ci suivra ensuite le chemin inverse et, grâce à la forme symétrique des zones réfléchissantes 13, elle ne rencontrera à nouveau que les zones réfléchissantes et sera renvoyée ves 4 sans perturber la sortie 3 vers le détecteur.

Le dispositif de la figure 3 permet aussi la réalisation du schéma de la figure 2, en utilisant cinq fibres dont les extrémités sont alignées dans le plan 11, avec les positions relatives représentées à la figure 6.

Ici encore la lumière issue de la fibre 1, par réflexion partielle sur le miroir partiel 13 et réflexion du reste sur le miroir 17 est envoyée sur les points symétriques de 1 respectivement par rapport à $C_2$ et à $C_1$, c'est à dire sur la fibre 3 de dérivation et sur l'extrémité 5 de la fibre retardatrice 7. De même le signal régénéré introduit par la fibre 4, et la lumière principale venant de la fibre retardatrice 7 par son extremité 6 se réunissent sur la même fibre aval 2, symétrique de 4 par rapport à $C_2$ et symétrique de 6 par rapport à $C_1$.

Bien entendu l'invention n'est pas strictement limitée au mode de réalisation qui a été décrit à titre d'exemple, mais elle couvre aussi les réalisations qui n'en différeraient que par des détails, par des variantes d'exécution ou par l'utilisation de moyens équivalents.

Ainsi l'ensemble pourrait fonctionner optiquement de la même façon si les miroirs sphériques 17 et 13 étaient des miroirs séparés maintenus par des moyens appropriés dans les positions relatives indiquées par rapport au plan 11 contenant les extrémités des fibres et les centres des miroirs. Cependant la construction monobloc décrite présente des avantages incontestables aussi bien pour le réglage de l'appareil que pour la fiabilité du composant ainsi réalisé.

De même les conditions de symétrie des positions relatives des fibres par rapport aux centres $C_1$ et $C_2$ n'imposent pas que toutes les fibres soient alignées pourvu que leurs extrémités restent dans le plan 11 et au voisinage des centres $C_1$ et $C_2$. Mais le dispositif décrit, avec les fibres alignées et jointives, est plus facile à réaliser de façon répétitive. Le fait que les fibres sont alignées et jointives impose alors que la distance entre les centres $C_1$ et $C_2$ soit égale au diamètre d'une fibre.

**Revendications**

1. Dispositif de couplage de signal optique, entre une fibre optique de transmission amont d'amenée (1) et une fibre optique de transmission aval de renvoi (2), destinée à assurer à la fois, la continuité de la transmission d'un signal optique entre les fibres amont (1) et aval (2), l'extraction d'une partie du signal optique provenant de la fibre amont pour le diriger vers un détecteur, et l'injection dans la fibre aval d'un nouveau signal optique en provenance d'un émetteur, dispositif du type comportant; un premier miroir sphérique concave (17) de sommet $S_1$ et de centre $C_1$, par rapport auquel l'extrémité de la fibre de transmission amont (1) est disposée dans le plan (11) perpendiculaire en $C_1$ à l'axe $S_1C_1$, en position légèrement décalée par rapport à $C_1$ de telle sorte que son image par le miroir (17) se forme symétriquement par rapport à $C_1$ sur l'extrémité d'entrée (2, 5) d'une fibre réceptrice, et un deuxième miroir sphérique concave (13), agenci par rapport au premier miroir (17) de façon que son centre soit légèrement décalé par rapport au centre $C_1$ de ce premier miroir (17), l'extremite d'une fibre (3) de liaison au détecteur et cette d'une fibre (4) de liaison à l'émetteur etant disposées, respectivement, symétriquement à l'extrémité de la fibre amont (1) et à celle de la fibre aval (2) par rapport à $C_2$, caracterisé par le fait que ledit deuxième miroir spherique concave (13) est un miroir partiellement réfléchissant formé de zones réfléchissantes réparties symetriquement par rapport à son sommets $S_2$ et séparant les zones restantes transparentes, ce deuxième miroir, d'extension sensiblement identique à celle du premier miroir, etant interposé entre le premier miroir (17) et le plan (11) perpendiculaire en $C_1$ à l'axe $S_1C_1$, et ayant sont centre $C_2$ dans ledit plan

perpendiculaire (11), de sorte que lesdites extremités de ladite fibre (3) de liaison au détecteur et de ladite fibre (4) de liaison à l'emetteur sont également disposées dans ce plan (11) perpendiculaire en $C_1$ à l'axe $S_1C_1$.

2. Dispositif selon la revendication 1, caractérisé par le fait que ladite fibre receptrice dont l'extremité d'entrée (2, 5) est disposée symetriquement, par rapport à $C_1$, à l'extremité de la fibre de transmission amont (1) est constituée par ladite fibre de transmission aval (2).

3. Dispositif selon la revendication 1, caractérisé par le fait que ladite fibre receptrice dont l'extremité d'entrée (2, 5) est disposée symetriquement, par rapport à $C_1$, à l'extremité de la fibre de transmission amont (1) est constituée par une fibre intermédiaire de retard optique (7) dont les extrémités d'entrée (5) et de sortie (6) sont disposées dans le plan (11), respectivement, symétriquement à l'extrémité des fibres amont (1) et aval (2) par rapport à $C_1$.

4. Dispositif selon l'une quelconque des revendications précédentes, caractérisé par le fait que les centres $C_1$ et $C_2$ sont décalés d'une distance égale au diamètre des fibres, et par le fait que les extrémités des fibres sont jointives et alignées dans la direction $C_1$—$C_2$.

**Patentansprüche**

1. Koppler für optische Signale zwischen einer stromauf optischen Zufuhrtransmissionsfaser (1) und einer optischen stromab Weiterleitungstransmissionsfaser (2), wobei der Koppler gleichzeitig dazu bestimmt ist, die Übertragungskontinuität eines optischen Signals zwischen den stromauf (1) und stromab (2) gelegenen Fasern sicherzustellen, ein Teil des optischen Signals zu extrahieren, das aus der stromauf angeordneten Faser stammt, um dieses Teil auf einen Detektor zu richten, und in die stromab gelegene Faser ein neues optisches Signal einzuführen, das von einem Sender stammt, und wobei der Koppler aufweist:

— einen ersten konkaven sphärischen Spiegel (17) mit einem Sattelpunkt $S_1$ und einen Krümmungsmittelpunkt $C_1$, bezüglich dem das Ende der stromauf gelegenen Transmissionsfaser (1) in der Ebene (11) angeordnet ist, die durch den Punkt $C_1$ senkrecht zu der Achse $S_1C_1$ verläuft und die eine gegenüber $C_1$ derart leicht verschobene Lage einnimmt, daß ihr Spiegelbild (17) sich symmetrisch bezüglich des Punktes $C_1$ auf dem Eingangsende (2, 5) einer zugehörigen Faser bildet und

— einen zweiten konkaven sphärischen Spiegel (13), der bezüglich des ersten Spiegels (17) derart angeordnet ist, daß sein Krümmungsmittelpunkt $C_2$ gegenüber dem Krümmungsmittelpunkt $C_1$ des ersten Spiegels (17) leicht verschoben ist und das Ende einer Verbindungsfaser (3) mit dem Detektor und das Ende einer Verbindungsfaser (4) zum Sender jeweils symmetrisch zum Ende der stromauf angeordneten Faser (1) bzw. zu dem Ende der stromab gelegenen Faser (2) bezüglich

$C_2$ angeordnet sind, dadurch gekennzeichnet, daß der zweite sphärische Konkavspiegel (13) ein teilweise reflektierender Spiegel ist, der aus reflektierenden Bereichen besteht, die symmetrisch bezüglich seines Sattelpunktes $S_2$ angeordnet sind und die verbleibenden transparenten Bereiche voneinander trennen, wobei der zweite Spiegel etwa dieselben Ausmaße hat wie der erste Spiegel und zwischen dem ersten Spiegel (17) und der Ebene (11) angeordnet ist, die im Punkte $C_1$ senkrecht zu der Achse $S_1C_1$ verläuft und wobei der zweite Spiegel seinen Krümmungsmittelpunkt in dieser senkrechten Ebene (11) hat, derart, daß die Enden der Verbindungsfaser (3) für den Detektor und der Verbindungsfaser (4) für den Sender ebenfalls in der durch $C_1$ verlaufenden zu der Achse $S_1C_1$ senkrechten Ebene (11) liegen.

2. Koppler nach Anspruch 1, dadurch gekennzeichnet, daß die Augnahmefaser, deren Eingangsende (2, 5) symmetrisch bezüglich dem Punkt $C_1$ am Ende der stromauf gelegenen Übertragungsfaser (1) angeordnet ist, von der stromab gelegenen Übertragungsfaser (2) gebildet wird.

3. Koppler nach Anspruch 1, dadurch gekennzeichnet, daß die Aufnahmefaser, deren Eingangsende (2, 5) symmetrisch bezüglich dem Punkt $C_1$ am Ende der stromauf gelegenen Übertragungsfaser (1) angeordnet ist, aus einer zwischengeschalteten optischen Verzögerungsfaser (7) besteht, deren Eingangs(5)- und Ausgangs(6)-Enden jeweils in der Ebene (11) symmetrisch zum Ende der stromauf gelegenen Fasern (1) und der stromab gelegenen Fasern (2) bezüglich des Punktes $C_1$ angeordnet sind.

4. Koppler nach einem der vorstehenden Ansprüche, dadurch gekennzeichnet, daß die Krümmungsmittelpunkte $C_1$ und $C_2$ gegeneinander mit einem Abstand verschoben sind, der gleich dem Durchmesser der Fasern ist und dadurch, daß die Enden der Fasern verbunden und in der Richtung $C_1$—$C_2$ ausgerichtet sind.

**Claims**

1. Device for coupling an optical signal between a supply upstream transmission optical fibre (1) and a return downstream transmission optical fibre (2), which device is intended to ensure at the same time the continuity of the transmission of an optical signal between the upstream fibre (1) and the downstream fibre (2), the extraction of a part of the optical signal originating from the upstream fibre in order to direct the same to a detector, and the injection into the downstream fibre of a new optical signal originating from an emitter, the device being of the type comprising: a first concave spherical mirror (17) of apex $S_1$ and of centre $C_1$, in relation to which the end of the upstream transmission fibre (1) is disposed in the plane (11) perpendicular at $C_1$ to the axis $S_1C_1$, at a position slightly offset in relation to $C_1$ in such a manner that its image by the mirror (17) is formed symmetrically in relation to $C_1$ on the

entrance end (2, 5) of a receiving fibre, and a second concave spherical mirror (13), arranged in relation to the first mirror (17) in such a manner that its centre $C_2$ is slightly offset in relation to the centre $C_1$ of this first mirror (17),

the end of a fibre (3) for connection to the detector and that of a fibre (4) for connection to the emitter being disposed, respectively, symmetrically at the end of the upstream fibre (1) and at that of the downstream fibre (2) in relation to $C_2$, characterized in that the said second concave spherical mirror (13) is a partially reflecting mirror formed of reflecting zones distributed symmetrically in relation to its apex $S_2$ and separating the transparent remaining zones, this second mirror, having an extent substantially identical to that of the first mirror, being interposed between the first mirror (17) and the plane (11) perpendicular at $C_1$ to the axis $S_1C_1$, and having its centre $C_2$ in the said perpendicular plane (11), in such a manner that the said ends of the said fibre (3) for connection to the detector and of the said fibre (4) for connection to the emitter are likewise disposed in this plane (11) perpendicular at $C_1$ to the axis $S_1C_1$.

2. Device according to Claim 1, characterized in that the said receiving fibre, the entrance end (2, 5) of which is disposed symmetrically in relation to $C_1$ at the end of the upstream transmission fibre (1), is constituted by the said downstream transmission fibre (2).

3. Device according to Claim 1, characterized in that the said receiving fibre, the entrance end (2, 5) of which is disposed symmetrically in relation to $C_1$ at the end of the upstream transmission fibre (1), is constituted by an optical retardation intermediate fibre (7), the entrance end (5) and the exit end (6) of which are disposed in the plane (11), respectively, symmetrically at the end of the upstream fibre (1) and the downstream fibre (2) in relation to $C_1$.

4. Device according to any one of the preceding claims, characterized in that the centres $C_1$ and $C_2$ are offset by a distance equal to the diameter of the fibres, and in that the ends of the fibres are contiguous and aligned in the direction $C_1$—$C_2$.

Fig 1

Fig 2

Fig 3

Fig 4

Fig 5

Fig 6